# EUROPÄISCHE PATENTSCHRIFT

(11) **EP 2 691 288 B1**
(45) Veröffentlichungstag und Bekanntmachung des Hinweises auf die Patenterteilung: **23.08.2017**
(21) Anmeldenummer: 12713101.9
(22) Anmeldetag: 29.03.2012
(51) Int. Cl.: B62D 21/09

(54) **PROFILTRÄGER FÜR EIN FAHRZEUGCHASSIS UND NUTZFAHRZEUGCHASSIS MIT EINEM SOLCHEN PROFILTRÄGER**
PROFILED BEAM FOR A VEHICLE CHASSIS AND UTILITY VEHICLE CHASSIS HAVING A PROFILED BEAM OF SAID TYPE
SUPPORT PROFILÉ POUR UN CHÂSSIS DE VÉHICULE ET CHÂSSIS DE VÉHICULE UTILITAIRE COMPRENANT UN TEL SUPPORT PROFILÉ

(30) Priorität: 30.03.2011 DE 202011000731 U
(43) Veröffentlichungstag der Anmeldung: 05.02.2014
(73) Patentinhaber: Schmitz Cargobull AG, 48341 Altenberge (DE)
(72) Erfinder: EBERT, Jörg, 50858 Köln (DE)
(74) Vertreter: Cohausz & Florack
(86) Internationale Anmeldenummer: PCT/EP2012/055694
(87) Internationale Veröffentlichungsnummer: WO 2012/130983

(56) Entgegenhaltungen:
- EP-A1- 1 566 553
- DE-B3-102006 027 722
- DE-U1- 20 022 552
- US-A1- 2001 039 712
- US-A1- 2003 227 164

## Beschreibung

Die Erfindung betrifft ein Nutzfahrzeugchassis mit den im Oberbegriff von Anspruch 1 angegebenen Merkmalen.

Im Nutzfahrzeugbau wird die Grundstruktur der Fahrzeugchassis in der Regel aus einfach geformten Längs- und Querträgern gebildet. Die Trägerprofile stützen dabei einerseits die Aufbauten und die Ladefläche ab, auf der im praktischen Einsatz das zu transportierende Gut steht. Anderseits dienen sie zum Befestigen von Anbauteilen, bei denen es sich beispielsweise um Fahrwerksteile, wie die Radaufhängung, Federung, Teile der Druckluftversorgung für die Bremseinrichtung etc., um Einrichtungen zum Bewegen, insbesondere Kippen, der Ladefläche oder um Kästen und andere Befestigungseinrichtungen handeln kann, die zum Aufbewahren von für den Betrieb des Fahrzeugs benötigten Hilfsmitteln dienen.

Für Auflieger für Sattelzüge oder konventionelle Anhänger für Lastkraftfahrzeuge kommen üblicherweise Längsträger zum Einsatz, die sich über die Länge des jeweiligen Aufliegers oder Anhängers erstrecken. Beispiele für Längsträger dieser Art sind in der DE 92 15 300 U1 und der DE 197 20 109 A1 beschrieben.

Neben dem voranstehend erläuterten Stand der Technik ist aus der DE 10 2006 027 722 B3 ein Hauptlangträger-Segment für ein Anhänger-Fahrgestell bekannt, das zur Anbringung der Fahrzeugachsen bestimmt ist und das mit wenigstens einem weiteren Hauptlangträger-Segment verbunden ist. Das Hauptlangträger-Segment besteht dabei aus einem abgewinkelten Stahl- oder Aluminiumprofil, das aus Blech gebogen ist und einen Doppel-L-Winkel beschreibt, so dass sich eine Profil-Konfiguration ergibt, die aus einem Vertikalsteg und einem Ober- und Untergurt zusammengesetzt ist. Am Obergurt und am Untergurt können dabei jeweils Verstärkungen in Form eines L-Winkelprofils angesetzt sein. Die Verstärkungen werden dazu mit den Hauptlangträger-Segmenten vernietet, verschraubt oder verschweißt.

Die über die Breite des Aufliegers oder Anhängers für Nutzfahrzeuge auftretenden Lasten werden in der Regel durch Querträgerprofile aufgenommen, die quer zur Längsrichtung des Aufliegers oder Anhängers ausgerichtet sind und auf den Längsträgern liegen.

Die Form und Stärke der im Fahrzeugbau eingesetzten Profilträger wird üblicherweise in Abhängigkeit von den auf ihnen lastenden Lasten sowie unter Berücksichtigung der geometrischen Gegebenheiten ausgelegt. Dabei besteht einerseits die Forderung nach einem minimalen Gewicht. Anderseits muss eine ausreichende Belastbarkeit auch unter ungünstigen Betriebsbedingungen gewährleistet sein.

Vor diesem Hintergrund bestand die Aufgabe der Erfindung darin, ein Nutzfahrzeugchassis anzugeben, das bei kostengünstiger Herstellung und minimalem Gewicht optimale Gebrauchseigenschaften aufweist.

Diese Aufgabe ist erfindungsgemäß dadurch gelöst worden, dass ein solches Nutzfahrzeugchassis die in Anspruch 1 angegebenen Merkmale aufweist.

Die Erfindung geht von dem Gedanken aus, einen hinsichtlich seiner Stärke minimiert ausgelegten Profilträger in bestimmten Abschnitten durch gezielt an ihm befestigte Verstärkungsbleche so zu verstärken oder zu ergänzen, dass der Profilträger im Bereich seiner betreffenden Teilstücke eine ausreichende Stärke für die dort im praktischen Einsatz lokal auftretenden hohen Belastungen gewährleistet oder an dem jeweiligen Ort ausreichende Möglichkeiten zum Anbringen weiterer Bauteile geschaffen sind.

Das jeweilige Verstärkungsblech erstreckt sich dabei jeweils vorzugsweise nur über eine Teillänge, Teilhöhe oder Teilbreite des Profilträgers, so dass der Träger über weite Abschnitte unverstärkt ist und das Potenzial zur Gewichtsminimierung optimal genutzt ist.

Dies schließt die Möglichkeit ein, dass sich das Verstärkungsblech jeweils in einer Richtung vollständig über den Profilträger erstreckt oder so ausgebildet ist, dass es in Längs- oder Breitenrichtung über den ihm zugeordneten Abschnitt des Profilträgers hinaussteht. Letzteres kann insbesondere dann zweckmäßig sein, wenn eine vergrößerte Auflagefläche für die Montage eines Anbauteils geschaffen werden soll. D. h., ein erfindungsgemäßes Verstärkungsblech kann sich beispielsweise über die gesamte Länge des Profilträgers erstrecken, wenn dies für eine den jeweiligen Anforderungen gerecht werdenden Aussteifung des Profilträgers erforderlich ist. Ebenso kann das Verstärkungsblech in Breitenrichtung, d. h. quer zur Längserstreckung des Profilträgers, seitlich über den Querträger hinausstehen, um eine maximal große Anlagefläche für das jeweilige Anbauteil zu schaffen. Auch kann das Verstärkungsblech selbst profiliert sein, um ihm eine ausreichende Eigensteifigkeit zu verleihen oder optimale Voraussetzungen für die Befestigung eines Anbauteils zu schaffen. In jedem dieser Fälle findet eine Verstärkung oder beispielsweise zum Befestigen eines Anbauteils nutzbare Ergänzung des Profilträgers dem Gedanken der Erfindung entsprechend nur in dem Bereich statt, an den in der Praxis besondere Anforderungen gestellt werden. Die nicht in erfindungsgemäßer Weise mit einem Verstärkungsblech belegten anderen Abschnitte des Profilträgers besitzen dagegen bei dieser Verwirklichung der Erfindung weiterhin eine minimierte Wandstärke und damit einhergehend ein minimiertes Gewicht.

Die zum Befestigen des Verstärkungsblechs verwendete Verbindungstechnik "Durchsetzfügen" erlaubt es dabei, das jeweilige Verstärkungsblech bei minimaler Beeinträchtigung der Tragfähigkeit des Profilträgers zu befestigen, wodurch eine weiter reduzierte Dimensionierung des Profilträgers möglich ist.

Wie im Einzelnen beispielsweise in der EP 0 284 902 B1 beschrieben, wird zum Durchsetzfügen, auch Clinchen genannt, ein Durchsetzfügewerkzeug eingesetzt, das einen Stempel und eine Matrize umfasst. Der Stempel hat dabei eine eng begrenzte, in der Regel kreisrunde Druckfläche, mit der er gegen die zu fügenden Bauteile drückt. Bei Herstellung der erfindungsgemäß vorgesehenen Durchsetzfügeverbindung zwischen dem Verstärkungsblech und dem zugeordneten Trägerprofil wird das Verstärkungsblech flach auf den ihm zugeordneten Abschnitt des Profilträgers gelegt. Anschließend wird der Stempel von der einen und die Matrize von der anderen Seite her an die zu fügenden Teile angesetzt und ein der Druckfläche des Stempels entsprechender Abschnitt des Verstärkungsblechs bzw. des Profilträgers, ähnlich wie beim Tiefziehen, unter plastischer Deformation in die Matrize gedrückt. Die Matrize ist dabei so ausgebildet, dass die Fügezone eine druckknopfähnliche Form mit einer gewissen Hinterschneidung erhält, so dass die zu fügenden Teile form- und kraftschlüssig miteinander verbunden sind.

Im Bereich der fahrzeugtechnischen Anwendungen ist das Durchsetzfügen bisher nur für die Verbindung dünnwandiger Karosseriebauteile eingesetzt worden. Überraschend hat sich nun herausgestellt, dass sich die Vorteile dieser Verbindungstechnik auch für die Verbindung von Profilträgern und Verstärkungsblechen nutzen lassen, die eine gegenüber den konventioneller Weise für das Durchsetzfügen eingesetzten Blechmaterialien deutlich höhere Wandstärke und Festigkeit bzw. Härte aufweisen.

So lassen sich in erfindungsgemäßer Weise insbesondere aus einem Stahlwerkstoff bestehende Profilträger partiell mit einem ebenfalls aus einem Stahl bestehenden Verstärkungsblech verstärken. Dies erlaubt es, zwecks Gewichtseinsparung einen Profilträger zu verwenden, der an bestimmten Abschnitten für die im praktischen Einsatz auftretenden Kräfte unterdimensioniert ist. Indem ein solcher Profilträger in den betreffenden Abschnitten mit Hilfe des Verstärkungsblechs gezielt verstärkt wird, kann er auch dort den jeweils auftretenden Anforderungen sicher standhalten.

In diesem Zusammenhang wirkt es sich besonders vorteilhaft aus, dass die Festigkeit einer erfindungsgemäß vorgesehenen Durchsetzfügeverbindung regelmäßig über dem Niveau der Festigkeit einer Punktschweißverbindung liegt. Die Dauerfestigkeit der Durchsetzfügeverbindung ist gleichzeitig höher als bei Punktschweißverbindungen, da bei der Durchsetzfügeverbindung keine Kerbwirkung auftritt und auch keine Wärmeeinflusszone entsteht, in der es zu das jeweilige Bauteil schwächenden Gefügeveränderungen kommt.

Ebenso günstig wirkt es sich aus, dass Durchsetzfügeverbindungen mit einfachen Werkzeugen und ohne Zusatzwerkstoffe oder -bauteile hergestellt werden können, wodurch geringe Bearbeitungszeiten und Herstellkosten erzielt werden.

Der Umstand, dass das Durchsetzfügen kalt durchgeführt wird, trägt zusätzlich zu einer Kostenminimierung bei. So können sowohl der jeweilige Profilträger als auch das an ihm zu befestigende Verstärkungsblech vor der Herstellung der Durchsetzfügeverbindung mit einem vor Korrosion schützenden metallischen Schutzüberzug, wie einer Verzinkung, versehen sein. Im Zuge der Erzeugung der Durchsetzfügeverbindung bleibt der jeweilige Schutzüberzug vollständig erhalten, so dass auch im Bereich der Durchsetzfügeverbindung ein dauerhafter Korrosionsschutz gesichert ist, ohne dass dazu zusätzliche Maßnahmen erforderlich sind.

Mit der Erfindung ist es möglich, für Anwendungen im Nutzfahrzeugbau Profilträger einzusetzen, deren Wandstärke generell um mindestens 15 % gegenüber den für dieselbe Anwendung bisher üblicherweise verwendeten Profilelementen vermindert ist. Die damit einhergehende Gewichtsersparnis kann zur Erhöhung der Nutzlast des jeweiligen Fahrzeugs genutzt werden und wirkt sich günstig in Bezug auf den Energieverbrauch aus. Typischerweise liegen die Wandstärken eines erfindungsgemäßen, aus einem Stahl bestehenden Profilträgers im Bereich von 2 - 7 mm, insbesondere 3 - 6 mm.

Besonders geeignet für die erfindungsgemäß vorgesehene Art und Weise ihrer partiellen Verstärkung sind Profilträger, die im Querschnitt I-, T-, U- oder Z-förmig ausgebildet sind. Bei all diesen Profilträgerformen sind jeweils Gurt-, Schenkel- oder Stegabschnitte vorhanden, die eine ebene, für das Durchsetzfügen günstige Anlagefläche für das jeweilige Verstärkungsblech bieten. So kann beispielsweise für die Befestigung einer Fahrwerkskomponente an dem Profilträger das Verstärkungsblech am Steg des jeweiligen Profilträgers anliegen, um beispielsweise eine Schraub- oder Bolzenbefestigung mit quer zur Längserstreckung des jeweiligen Profilträgers und horizontal ausgerichteter Ausrichtung zu bewerkstelligen. Ebenso kann es aber beispielsweise in den Bereichen, in denen eine vertikal ausgerichtete Befestigung erfolgen soll, zweckmäßig sein, das Verstärkungsblech an einem Gurt des Profilträgers anzulegen. Dies kann beispielsweise an den für die Befestigung einer Ladefläche oder eines allgemeinen Anbauteils, wie eines Staukastens oder eines Stützbocks, sinnvoll sein.

Die Anordnung des Verstärkungsblechs sowie die Richtung, in der das Durchsetzfügen durchgeführt wird, können jeweils so ausgewählt werden, dass im jeweiligen Verstärkungsbereich für das dort am Profilträger zu montierende Anbauteil eine optimale Anlagefläche bereitsteht. So kann es beispielsweise dann, wenn an einem Profilträger in erfindungsgemäßer Weise Befestigungspunkte für Querträger oder andere auf dem Profilträger aufzulegende Bauelemente geschaffen werden sollen, zweckmäßig sein, das Verstärkungsblech auf der Seite des jeweiligen Profilgurts anzulegen, die dem Steg des Profilträgers zugeordnet ist.

Wenn gleichzeitig die Fügerichtung beim Herstellen der Durchsetzfügeverbindung von der dem Anbauteil zugeordneten Seite hin zum Verstärkungsblech gerichtet ist, steht zum Positionieren des jeweiligen Anbauteils eine optimal ebene Anlagefläche zur Verfügung.

Die Wandstärke des jeweils eingesetzten Verstärkungsblechs lässt sich über ein weites Spektrum variieren, so dass es problemlos möglich ist, die Stärke des Verstärkungsblechs an die jeweils zu erwartenden Lasten anzupassen. In der Praxis kommen 1 - 17 mm, insbesondere 2 - 15 mm, dicke Verstärkungsbleche zum Einsatz, die aus einem Stahlwerkstoff oder einem anderen Werkstoff von geeigneter Festigkeit bestehen.

Nachfolgend wird die Erfindung anhand einer ein Ausführungsbeispiel darstellenden Zeichnung näher erläutert. Es zeigen:

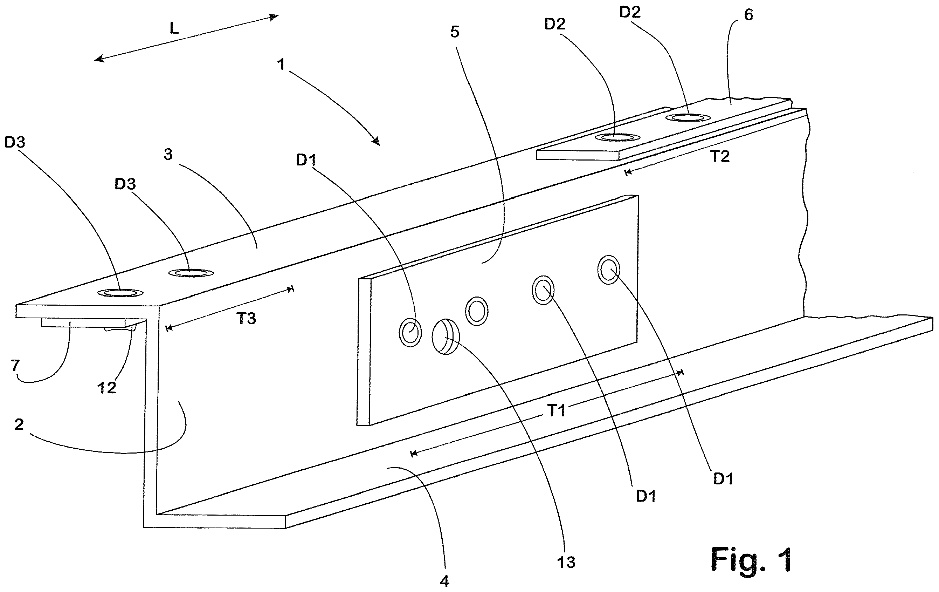

- Fig. 1: einen Profilträger für ein Nutzfahrzeugchassis in einer perspektivischen Ansicht;

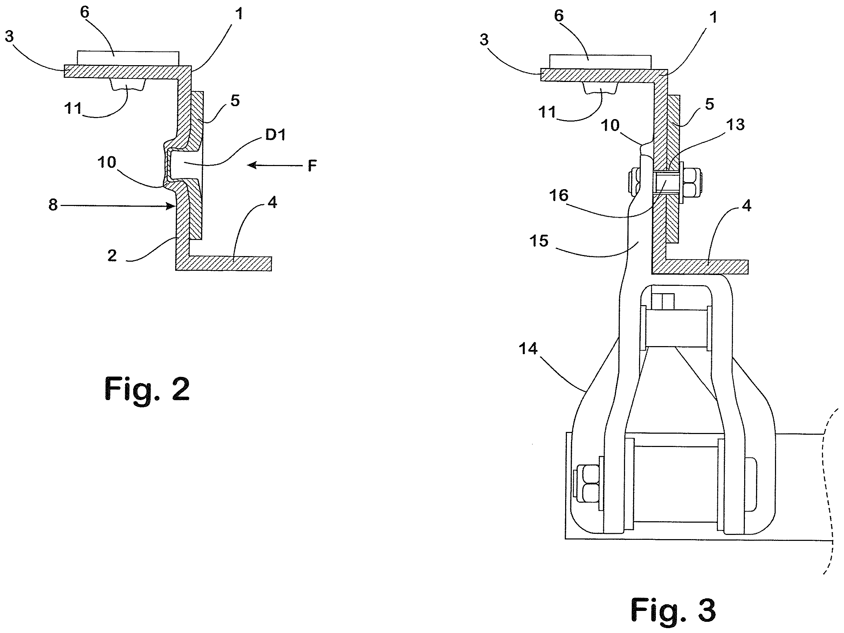

- Fig. 2: den Profilträger in einem Querschnitt entlang der in Fig. 1 eingezeichneten Schnittlinie X-X;
- Fig. 3: den Profilträger in einem Querschnitt mit einem daran befestigten Fahrwerksteil entlang der in Fig. 1 eingezeichneten Schnittlinie Y-Y.
- Fig. 4: einen weiteren Profilträger für ein Nutzfahrzeugchassis in einer perspektivischen Ansicht.

Bei dem in den Figuren dargestellten Z-förmigen Profilträger 1 handelt es sich um den Längsträger eines hier weiter nicht dargestellten Chassis für den Auflieger eines hier ebenfalls nicht gezeigten Sattelzugs. In der Praxis erstreckt sich der Profilträger 1 über einen wesentlichen Teil der Länge des betreffenden Aufliegers.

Der einstückig aus einem verzinkten, 4 - 5 mm dicken Grobstahlblech geformte Profilträger 1 weist einen in Einbauposition vertikal ausgerichteten Steg 2, einen oberen Gurt 3, der an den oberen Längsrand des Stegs 2 angeformt und im rechten Winkel von dem Steg 2 seitlich absteht, und einen unteren Gurt 4 auf, der an den unteren Längsrand des Stegs 2 angeformt und im rechten Winkel von dem Steg 2 seitlich in eine zum Steg 2 entgegengesetzte Richtung absteht.

An dem Profilträger 1 ist an seinen Teilstücken T1,T2,T3, die im praktischen Einsatz einer besonderen Belastung unterworfen sind, durch jeweils ein Verstärkungsblech 5,6,7 verstärkt.

Die ebenfalls mit einer Zinkbeschichtung als Korrosionsschutz versehenen Verstärkungsbleche 5,6,7 bestehen beispielsweise aus einem 6 mm dicken höherfesten Stahl. Dabei ist das eine Verstärkungsblech 5 an der dem Gurt 3 zugewandten Seitenfläche 8 des Stegs 2 angeordnet, das zweite Verstärkungsblech 6 in Längsrichtung L nach hinten versetzt zu dem Verstärkungsblech 5 auf den oberen Gurt 3 aufgelegt und das dritte Verstärkungsblech 7 in Längsrichtung L entgegengesetzt zum Verstärkungsblech 6 gegenüber dem Verstärkungsblech 5 zur Stirnseite des Profilelements 1 hin versetzt an der dem Steg 2 zugeordneten Unterseite 9 des Gurts 3 befestigt.

Die Verstärkungsbleche 5 - 7 sind mit dem jeweils zugeordneten Steg 2 bzw. Gurt 3 jeweils durch Durchsetzfügeverbindungen D1, D2, D3 verbunden, die in regelmäßigen Abständen in Längsrichtung L beabstandet zueinander und bezogen auf die jeweilige Schmalseite der Verstärkungsbleche 5 - 7 mittig ausgerichtet sind. Die Durchsetzfügeverbindungen D1 - D3 sind in konventioneller Weise mit Hilfe eines hier nicht dargestellten Durchsetzfügewerkzeugs so hergestellt worden, dass im Bereich der jeweiligen Fügeverbindung D1 - D3 das Material des jeweiligen Verstärkungsblechs 5 - 7 durch Ausbildung einer leichten Hinterschneidung jeweils form- und kraftschlüssig, unlösbar und fest mit dem Material des zugeordneten Stegs 2 bzw. Gurts 3 des Profilträgers 1 verbunden ist.

Die Fügerichtung F ist dabei jeweils so gewählt worden, dass an der zum Anlegen eines Bauelements bestimmten Seite der Durchsetzfügeverbindungen D1 - D3 eine weitestgehend ebene Anlagefläche gebildet ist. So ist beim am Steg 2 anliegenden Verstärkungsblech 5 der nicht gezeigte Stempel von der dem Gurt 4 zugeordneten Seite zuerst in das Verstärkungsblech 5 und danach in den Steg 2 gedrückt worden, so dass hut- oder druckknopfförmige Ausstülpungen 10 der so erzeugten Druckfügeverbindungen D1 auf der dem Gurt 3 zugeordneten Seite über den Steg 2 hinausstehen. Genauso ist beim Verstärkungsblech 6 der nicht gezeigte Stempel von dessen freier Oberseite her zuerst in das Verstärkungsblech 6 und danach in den Gurt 3 gedrückt worden, so dass die jeweilige Ausstülpung 11 der so erzeugten Druckfügeverbindungen D2 auf der dem Steg 2 zugeordneten Unterseite über den Gurt 3 hinausstehen. Beim Verstärkungsblech 7 ist dagegen der nicht gezeigte Stempel von dessen Oberseite her in den Gurt 3 und dann erst in das Verstärkungsblech 7 gedrückt worden, so dass die jeweilige Ausstülpung 12 der so erzeugten Druckfügeverbindungen D3 auf der dem Steg 2 zugeordneten Unterseite über den Gurt 3 hinausstehen.

In das erste Verstärkungsblech 5 ist eine zusätzlich durch den Steg 2 führende, quer zur Längsrichtung L ausgerichtete Befestigungsöffnung 13 für ein Fahrwerksbauteil 14 eingeformt, bei dem es sich hier beispielsweise um ein Federbockgehäuse handelt.

Das Fahrwerksbauteil 14 liegt mit seinem einen Schenkel 15 an der dem Gurt 3 zugeordneten Seite des Stegs 2 im Bereich des zwischen zwei der Durchsetzfügeverbindungen D1 vorhandenen Abständen an und ist zusätzlich mit einem Absatz an der Unterseite des Gurtes 4 abgestützt. Mittels einer durch die Befestigungsöffnung 13 und eine entsprechende, hier nicht sichtbare Durchgangsöffnung des Schenkels 15 gesteckten Schraube 16 ist das Fahrwerksbauteil 14 an dem Profilträger 1 fixiert.

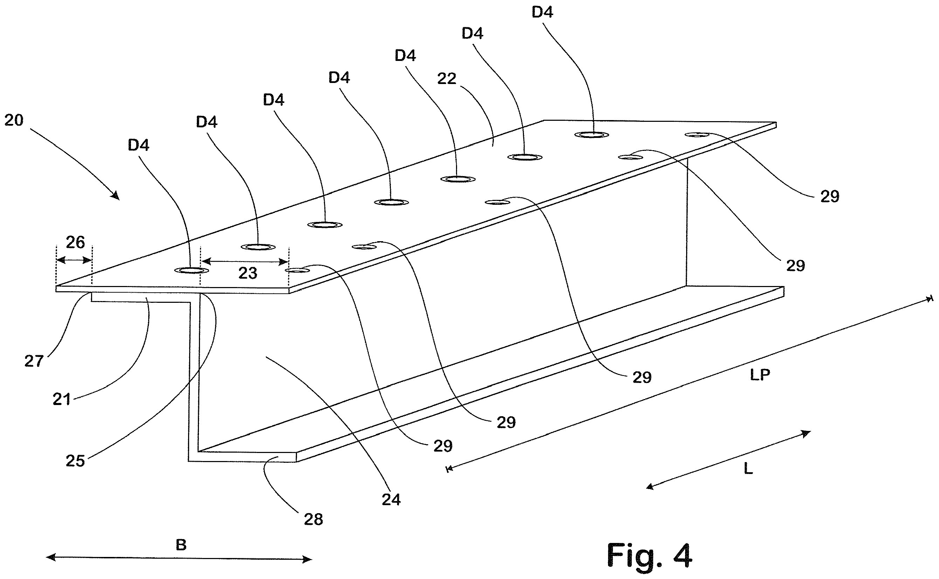

Der in Fig. 4 dargestellte, wie der Z-förmige Profilträger 1 geformte Profilträger 20 ist ebenfalls aus Stahl hergestellt. Auf seinem oberen Gurt 21 liegt ein Verstärkungsblech 22 auf, das sich über die gesamte Länge LP des Profilträgers 1 erstreckt.

Gleichzeitig steht das Verstärkungsblech 22 in der quer zur Längsrichtung L gemessenen Breitenichtung B des Profilträgers 20 jeweils seitlich über den oberen Gurt 21 hinaus. Der Überstand 23 des Verstärkungsblechs 22 über die dem Steg 24 zugeordnete Längskante 25 des oberen Gurts 21 ist dabei größer als der Überstand 26, mit dem das Verstärkungsblech 22 über die vom Steg 24 abgewandte Längskante 27 des oberen Gurts 21 hinaussteht. In den über den Steg 24 hinausstehenden und dementsprechend oberhalb des unteren Gurts 28 des Profilträgers 20 angeordneten Abschnitt des Verstärkungsblechs 22 sind Durchgangsöffnungen 29 eingeformt, die beispielsweise zum Befestigen einer auf das Verstärkungsblech aufgelegten, hier nicht gezeigten Ladefläche eines Nutzfahrzeugs genutzt werden können.

Über in regelmäßigen Abständen in Längsrichtung L verteilte und bezogen auf die Breite des oberen Gurts 21 mittig platzierte Durchsetzfügeverbindungen D4 ist das Verstärkungsblech 22, wie für die Verstärkungsbleche 5 - 7 bereits beschrieben, mit dem Profilträger 20 fest verbunden.

Durch das Verstärkungsblech 22 ist auf diese Weise nicht nur der obere Gurt 21 des Profilträger 20 verstärkt, sondern auch eine optimal großflächige Auflagefläche für ein jeweils an dem Profilträger 20 abzustützendes befestigendes Bauteil geschaffen.

### BEZUGSZEICHEN

- 1: Z-förmiger Profilträger
- 2: Steg des Profilträgers 1
- 3: oberer Gurt des Profilträgers 1
- 4: unterer Gurt des Profilträgers 1
- 5 - 7: Verstärkungsbleche
- 8: dem Gurt 3 zugewandte Seitenfläche 8 des Stegs 2
- 9: Unterseite des Gurts 3
- 10: Ausstülpungen der Druckfügeverbindungen D1
- 11: Ausstülpungen der Druckfügeverbindungen D2
- 12: Ausstülpungen der Druckfügeverbindungen D3
- 13: Befestigungsöffnung
- 14: Fahrwerksbauteil (Federbockgehäuse)
- 15: Schenkel des Fahrwerksbauteil 14
- 16: Schraube
- 20: Profilträger
- 21: oberer Gurt des Profilträgers 20
- 22: Verstärkungsblech
- 23, 26: Überstände des Verstärkungsblechs 22 in Breitenrichtung B
- 24: Steg des Profilträgers 20
- 25,27: Längskanten des Profilträgers 20
- 28: unterer Gurt 27 des Profilträgers 20
- 29: Durchgangsöffnungen
- B: Breitenrichtung des Profilträgers
- D1 - D4: Durchsetzfügeverbindungen
- F: Fügerichtung
- L: Längsrichtung des Profilträgers 1
- LP: Länge des Profilträgers 20
- T1 - T3: Teilstücke des Profilträgers 1

## Patentansprüche

1. Nutzfahrzeugchassis für einen Auflieger eines Sattelzugs, mit einem aus Stahl bestehendem Profilträger (1,20), der sich über einen wesentlichen Teil der Länge des Nutzfahrzeugchassis erstreckt und der im Querschnitt I-, T-, U- oder Z-förmig ausgebildet ist, wobei mindestens an einem Teilstück (T1 - T3) des Profilträgers (1,20) ein aus Stahl bestehendes Verstärkungsblech (5,6,7) anliegt, das fest und unlösbar mit dem zugeordneten Teilstück (T1 - T3) des Profilträgers (1,20) verbunden ist, **dadurch gekennzeichnet, dass** die Verbindung zwischen dem Verstärkungsblech (5,6,7,22) und dem zugeordneten Teilstück (T1,T2,T3) des Profilträgers (1,20) durch mindestens eine Durchsetzfügeverbindung (D1 - D4) hergestellt ist, und **dass** die Wandstärke des Profilträgers (1,20) 2 - 7 mm und die Wandstärke des Verstärkungsblechs (5,6,7,22) 1 - 17 mm beträgt.

2. Nutzfahrzeugchassis nach Anspruch 1, **dadurch gekennzeichnet, dass** die Wandstärke des Profilträgers (1,20) 3 - 6 mm beträgt.

3. Nutzfahrzeugchassis nach einem der voranstehenden Ansprüche, **dadurch gekennzeichnet, dass** das Verstärkungsblech (5,6,7,22) am Steg (2,24) des Profilträgers (1,20) anliegt.

4. Nutzfahrzeugchassis nach einem der voranstehenden Ansprüche, **dadurch gekennzeichnet, dass** das Verstärkungsblech (6,7) an einem Gurt (3,21) des Profilträgers (1,20) anliegt.

5. Nutzfahrzeugchassis nach Anspruch 4, **dadurch gekennzeichnet, dass** das Verstärkungsblech (7) an derjenigen Seite des Gurts (3) anliegt, die dem Steg (2) des Profilträgers (1,20) zugeordnet ist.

6. Nutzfahrzeugchassis nach einem der voranstehenden Ansprüche, **dadurch gekennzeichnet, dass** die Wandstärke des Verstärkungsblechs 2 - 15 mm beträgt.

7. Nutzfahrzeugchassis nach einem der voranstehenden Ansprüche, **dadurch gekennzeichnet, dass** das Verstärkungsblech (5,6,7,22) an einem Teilstück (T1 - T3) des Profilträgers (1,20) angeordnet ist, welches für die Montage eines Anbauteils (14) des Fahrzeugchassis vorgesehen ist.

8. Nutzfahrzeugchassis nach einem der voranstehenden Ansprüche, **dadurch gekennzeichnet, dass** sich das Verstärkungsblech (22) über die gesamte Länge (LP) des Profilträgers (1,20) erstreckt.

9. Nutzfahrzeugchassis nach einem der voranstehenden Ansprüche, **dadurch gekennzeichnet, dass** das Verstärkungsblech (22) in Längs- oder Breitenrichtung über den ihm zugeordneten Abschnitt des Profilträgers (20) hinaussteht.

10. Nutzfahrzeugchassis nach einem der voranstehenden Ansprüche, **dadurch gekennzeichnet, dass** auf dem Profilträger (1,20) ein Anbauteil (14) befestigt ist, **dass** das Verstärkungsblech (5) an der vom jeweiligen Anbauteil (14) abgewandten Seite des Profilträgers (1,20) anliegt und **dass** die Fügerichtung (F) beim Herstellen der Durchsetzfügeverbindung (D1 - D4) von der dem Anbauteil (14) zugeordneten Seite hin zum Verstärkungsblech (5,6,7,22) gerichtet ist.

## Claims

1. Utility vehicle chassis for a trailer of an articulated lorry, having a profile beam (1,20) made of steel which extends over a substantial part of the length of the utility vehicle chassis and which is designed to be I-, T-, U- or Z-shaped in cross-section, wherein at least at one section (T1 - T3) of the profile beam (1,20) there rests a reinforcing plate (5,6,7) made of steel, which is permanently and non-detachably connected to the associated section (T1 - T3) of the profile beam (1,20), **characterized in that** the connection between the reinforcing plate (5,6,7,22) and the associated section (T1,T2,T3) of the profile beam (1,20) is produced by at least one clinched connection (D1 - D4) and that the wall thickness of the profile beam (1,20) is 2 - 7 mm and the wall thickness of the reinforcing plate (5,6,7,22) is 1 - 17 mm.

2. Utility vehicle chassis according to Claim 1, **characterised in that** the wall thickness of the profile beam (1,20) is 3 - 6 mm.

3. Utility vehicle chassis according to any one of the preceding claims, **characterised in that** the reinforcing plate (5,6,7,22) rests on the web (2,24) of the profile beam (1,20).

4. Utility vehicle chassis according to any one of the preceding claims, **characterised in that** the reinforcing plate (6,7) rests on a belt (3,21) of the profile beam (1,20).

5. Utility vehicle chassis according to Claim 4, **characterised in that** the reinforcing plate (7) rests on the side of the belt (3) which is associated with the web (2) of the profile beam (1,20).

6. Utility vehicle chassis according to any one of the preceding claims, **characterised in that** the wall thickness of the reinforcing plate is 2 - 15 mm.

7. Utility vehicle chassis according to any one of the preceding claims, **characterised in that** the reinforcing plate (5,6,7,22) is arranged on a section (T1 - T3) of the profile beam (1,20) which is provided for assembly of an attachment part (14) of the vehicle chassis.

8. Utility vehicle chassis according to any one of the preceding claims, **characterised in that** the reinforcing plate (22) extends over the entire length (LP) of the profile beam (1,20).

9. Utility vehicle chassis according to any one of the preceding claims, **characterised in that** the reinforcing plate (22) projects in the length or width direction beyond the section of the profile beam (20) associated with it.

10. Utility vehicle chassis according to any one of the preceding claims, **characterised in that** an attachment part (14) is fixed to the profile beam (1,20), that the reinforcing plate (5) rests on the side of the profile beam (1,20) remote from the respective attachment part (14) and that during production of the clinched connection (D1 - D4) the joining direction (F) is directed from the side associated with the attachment (14) through to the reinforcing plate (5,6,7,22).

## Revendications

1. Châssis de véhicule utilitaire pour une remorque d'un véhicule routier comportant un support profilé (1, 20) réalisé en acier qui s'étend sur une grande partie de la longueur du châssis du véhicule utilitaire et qui est conçu en forme de I, T, U ou Z en section transversale, auquel cas au moins une tôle de renforcement (5, 6, 7) réalisée en acier repose contre une partie (T1 - T3) du support profilé (1, 20) et est reliée à demeure et de manière inamovible à la partie (T1 - T3) associée du support profilé (1, 20), **caractérisé en ce qu'**une liaison entre la tôle de renforcement (5, 6, 7, 22) et la partie associée (T1, T2, T3) du support profilé (1, 20) est réalisée par une liaison par clinchage (D1 - D4), et que l'épaisseur de paroi du support profilé (1, 20) est de 2-7 mm et celle de la tôle de renforcement (5, 6, 7, 22) est de 1-17 mm.

2. Châssis de véhicule utilitaire selon la revendication 1, **caractérisé en ce que** l'épaisseur de paroi du support profilé (1, 20) est de 3-6 mm.

3. Châssis de véhicule utilitaire selon l'une quelconque des revendications précédentes, **caractérisé en ce que** la tôle de renforcement (5, 6, 7, 22) repose contre une traverse (2, 24) du support profilé (1, 20).

4. Châssis de véhicule utilitaire selon l'une quelconque des revendications précédentes, **caractérisé en ce que** la tôle de renforcement (6, 7) repose contre une sangle (3, 21) du support profilé (1, 20).

5. Châssis de véhicule utilitaire selon la revendication 4, **caractérisé en ce que** la tôle de renforcement (7) repose contre le côté de la sangle (3) qui est associé à la traverse (2) du support profilé (1, 20).

6. Châssis de véhicule utilitaire selon l'une quelconque des revendications précédentes, **caractérisé en ce que** l'épaisseur de paroi de la tôle de renforcement est de 2-15 mm.

7. Châssis de véhicule utilitaire selon l'une quelconque des revendications précédentes, **caractérisé en ce que** la tôle de renforcement (5, 6, 7, 22) est agencée sur une partie (T1 - T3) du support profilé (1, 20) qui est prévue pour le montage d'une pièce rapportée (14) du châssis du véhicule.

8. Châssis de véhicule utilitaire selon l'une quelconque des revendications précédentes, **caractérisé en ce que** la tôle de renforcement (22) s'étend sur l'ensemble de la longueur (LP) du support profilé (1, 20).

9. Châssis de véhicule utilitaire selon l'une quelconque des revendications précédentes, **caractérisé en ce que** la tôle de renforcement (22) dépasse, en direction de la longueur ou de la largeur, au-delà de la section du support profilé (20) lui étant associé.

10. Châssis de véhicule utilitaire selon l'une quelconque des revendications précédentes, **caractérisé en ce qu'**une pièce rapportée (14) est fixée sur le support profilé (1, 20) et que la tôle de renforcement (5) repose contre le côté du support profilé (1, 20) opposé à la pièce rapportée (14) respective et que la direction d'emboîtement (F), lors de la production de la liaison par clinchage (D1 - D4), est dirigée à partir du côté associé à la pièce rapportée (14) jusqu'à la tôle de renforcement (5, 6, 7, 22).
